# EUROPÄISCHE PATENTSCHRIFT

(11) **EP 3 409 801 B1**
(45) Veröffentlichungstag und Bekanntmachung des Hinweises auf die Patenterteilung: **23.08.2023**
(21) Anmeldenummer: 17173924.6
(22) Anmeldetag: 01.06.2017
(51) Int. Cl.: C22C 1/04, C22C 19/07, C22C 32/00

(54) **PULVERMETALLURGISCH HERGESTELLTER, HARTSTOFFPARTIKEL ENTHALTENDER VERBUNDWERKSTOFF, VERWENDUNG EINES VERBUNDWERKSTOFFS UND VERFAHREN ZUR HERSTELLUNG EINES BAUTEILS AUS EINEM VERBUNDWERKSTOFF**
SOLID PARTICLES PREPARED BY MEANS OF POWDER METALLURGY, HARD PARTICLE CONTAINING COMPOSITE MATERIAL, USE OF A COMPOSITE MATERIAL AND METHOD FOR MANUFACTURING A COMPONENT FROM A COMPOSITE MATERIAL
MATIÈRE COMPOSITE CONTENANT DES PARTICULES DURES, FABRIQUÉE PAR MÉTALLURGIE DES POUDRES, UTILISATION D'UNE MATIÈRE COMPOSITE ET PROCÉDÉ DE FABRICATION D'UN COMPOSANT EN MATIÈRE COMPOSITE

(43) Veröffentlichungstag der Anmeldung: 05.12.2018
(73) Patentinhaber: Deutsche Edelstahlwerke Specialty Steel GmbH & Co.KG, 58452 Witten (DE)
(72) Erfinder: Hill, Horst, Dr., 47929 Grefrath (DE); van Bennekom, André, Dr., 57234 Wilnsdorf (DE)
(74) Vertreter: Cohausz & Florack

(56) Entgegenhaltungen:
- JP-A- 2011 149 048
- OPRIS ET AL: "Development of Stellite alloy composites with sintering/HIPing technique for wear-resistant applications", MATERIALS AND DE, LONDON, GB, Bd. 28, Nr. 2, 1. November 2006 (2006-11-01), Seiten 581-591, XP005841099, ISSN: 0261-3069, DOI: 10.1016/J.MATDES.2005.08.004
- XU GUOJIAN ET AL: "Characteristic behaviours of clad layer by a multi-layer laser cladding with powder mixture of Stellite-6 and tungsten carbide", SURFACE AND COATINGS TECHNOLOGY, Bd. 201, Nr. 6, 2006, Seiten 3385-3392, XP029041190, ISSN: 0257-8972, DOI: 10.1016/J.SURFCOAT.2006.07.210
- XU G J ET AL: "Characteristics of multilayer laser cladding using powder mixture of Co based alloy and vanadium carbide", MATERIALS SCIENCE AND TECHNOLOGY INSTITUTE OF MATERIALS UK, Bd. 24, Nr. 1, Januar 2008 (2008-01), Seiten 73-84, XP002776485, ISSN: 0267-0836
- GÜLSOY H ÖZKAN ET AL: "Powder injection molding of Stellite 6 powder: Sintering, microstructural and mechanical properties", MATERIALS SCIENCE AND ENGINEERING: A, Bd. 651, 2008, Seiten 914-924, XP029357308, ISSN: 0921-5093, DOI: 10.1016/J.MSEA.2015.11.058

## Beschreibung

Die Erfindung betrifft ein Halbzeug mit einem Verbundwerkstoff, der pulvermetallurgisch hergestellt ist und Hartstoffpartikel enthält. Solche Verbundwerkstoffe werden in der Fachsprache auch als Metallmatrix-Verbundwerkstoffe bezeichnet.

Ebenso betrifft die Erfindung ein Verfahren zum Herstellen eines Bauteils.

Schließlich betrifft die Erfindung auch die Verwendung von einem Halbzeug der erfindungsgemäßen Art.

Wenn im vorliegenden Text Angaben zu Gehalten von Legierungen gemacht werden, beziehen sich diese immer auf das Gewicht, solange nichts anderes ausdrücklich angegeben ist.

Speziell zielt die Erfindung auf einen Verbundwerkstoff ab, der für die Herstellung von Bauteilen geeignet ist, die im praktischen Einsatz hohen thermischen Belastungen in einer abrasiv- oder korrosionsbelastenden Umgebung ausgesetzt sind.

In vielen Anwendungsbereichen kommen entweder korrosionsbeständige oder verschleißbeständige Werkstoffe zum Einsatz. Die Kombination dieser Eigenschaften in einem Werkstoff ist oft anspruchsvoll. Dies gilt vor allem, wenn der Korrosions- und/oder Verschleißangriff durch eine Temperaturbelastung von mehr als 400 °C, insbesondere von bis zu 1000°C, überlagert wird.

Beispielhaft für Bauteile, die derartigen Belastungskollektiven ausgesetzt sind, sind
- Extruderschnecken
- Ventilsitze von Verbrennungsmotoren
- Umformwerkzeuge
- Schneidwerkzeuge, die beispielsweise in der Metallverarbeitung

Seit Anfang des letzten Jahrhunderts sind hochbelastbare Kobalt-Legierungen bekannt, die für die Herstellung solcher Bauteile besonders geeignet sind (US 658,367 A, US 873,745 A, US 1,057,828 A).

Moderne Varianten dieser Werkstoffe enthalten beispielsweise (in Gew.-%) 27 - 32 % Cr, 7,5 - 9,5 % W, 1,4 - 1,7 % C (für Anwendung als Panzerung) oder 1,7 - 2,0 % C (für die Herstellung von Gießformen) und optional Gehalte an Ni, Fe, Si, Mn, sowie als Rest Kobalt und herstellungsbedingt unvermeidbare Verunreinigungen (s. Datenblatt "Stellite^{™} 12 Alloy", Kennametal Stellite, ^{©}2013 Kennametal Inc., B-13-03109).

Auf dem Datenblatt "Schematischer "Stammbaum" Celsite (Kobalt-Basis-Legierungen) und ihre Modifikationen", erhältlich unter https://www.dew-stahl.com/fileadmin/files/dew-stahl.com/documents/Publikationen/ Werkstoffdiagramme/dew_stammbaum_celsite-und-modifikation de_131024.pdf, sind ebenfalls auf Kobalt basierende Werkstoffe mit (in Gew.-%) C-Gehalten von 0,3 - 2,4 %, Cr-Gehalten von 28,0 - 32,0 Cr, Mo-Gehalten von bis zu 5 % Mo, W-Gehalten von bis zu 13,0 % W, Ni-Gehalten von 1,0 - 22,5 %, Fe-Gehalten von 1,0 - 1,5 %, angegeben, die als Rest Kobalt und unvermeidbare Verunreinigungen aufweisen. Diese Werkstoffe können sowohl schmelz-, als auch pulvermetallurgisch erzeugt und verarbeitet werden. Dabei werden Kobaltbasiswerkstoffe häufig als Gussteil verarbeitet oder in Form von Fülldraht oder als Elektrode für das Auftragsschweißen verwendet.

Nach der formgebenden Herstellung durchlaufen die aus Kobaltbasiswerkstoffen hergestellten Teile keine nachgeschaltete Wärmebehandlung mehr, da Werkstoffe auf Co-Basis im Zuge einer solchen Behandlung keine Gefügeumwandlung erfahren und deshalb keine Festigkeitssteigerung durch die Wärmebehandlung erzielt werden kann. Co-basierte Werkstoffe sind vielmehr "naturhart". Ihre Endhärte liegt bereits nach der Erzeugung vor.

Eine Umformung der hier in Rede stehenden Kobaltbasiswerkstoffe ist aufgrund von deren Hochtemperaturfestigkeit und ihrer Gefügestruktur (hohe Karbidgehalte, teilweise netzwerkartige Erstarrung) nicht möglich.

Die Herstellung und Verarbeitung als pulvermetallurgisch hergestelltes Material der voranstehend erläuterten Werkstoffe hat im Vergleich zur konventionellen Route über vergossenes Material den Vorteil, dass die pulvermetallurgisch hergestellten Bauteile eine deutlich höhere Zähigkeit und insgesamt bessere mechanische Eigenschaften erreichen können. Dabei ist es beispielsweise aus dem oben genannten Schaublatt bekannt, dass sich die betreffenden Werkstoffe auch durch Heiß-Isostatisches-Pressen ("HIPen") zu Bauteilen formen lassen.

Aus den genannten Kobaltbasiswerkstoffen bestehende Pulver werden auch mittels geeigneter Schweißverfahren, wie beispielsweise dem Plasma-Transferred-Arc (PTA) Verfahren auf ein Substrat aufgeschweißt, um lokal eine Verschleißschutzschicht zu erzeugen.

Im Artikel "Development of Stellite alloy composites with sintering/HIPing technique für wear resistant-applications" von Opris et al. Materials and Design, Bd. 28 Nr. 2, S. 581 ff. werden Co-basierte Legierungen in Verbundwerkstoffen für verschleißfeste Anwendungen beschrieben.

Die Artikel "Characteristic behaviours of lad layer by a multi-layer laser cladding with powder mixture of Stellite-6 and tungsten carbide" von Xu et al., Surface & Coatings Technology 201, S. 3385 ff. und "Characteristics of multilayer laser cladding using powder mixture of Co based alloy and vanadium carbide" von Xu et al., Materials Science and Technology, Vol. 24, Nr. 1, S. 73 ff. beschreiben ein Laserschweißen von Co-basierten Verbundwerkstoffen.

Schließlich ist aus der JP 2011 149048 A ein Verfahren zu Herstellung hochpräziser Bauteile durch Heißpressformen eines Pulvers bekannt. Dessen Partikel bestehen aus einer zur Gruppe der Stellite gehörenden Kobaltbasislegierung, die 30 Gew.-% Cr, 23 Gew.-% W und 2,5 Gew.-% C enthält. Nach dem Einfüllen in eine Matrize wird das Pulver bei Temperaturen von mindestens 300 °C zu einem festen Bauteil verpresst.

Vor dem Hintergrund des voranstehend erläuterten Standes der Technik ergab sich die Aufgabe, ein Halbzeug mit einem Werkstoff auf Kobaltbasis zu schaffen, das eine für die Herstellung von Bauteilen, die im praktischen Einsatz hohen thermischen Belastungen in Verbindung mit hohen korrosiven und abrasiven Belastungen ausgesetzt sind, weiter optimierte Eigenschaftskombination bietet.

Ein diese Aufgabe lösendes Halbzeug weist gemäß der Erfindung mindestens die in Anspruch 1 genannten Merkmale auf.

Ebenso sollte ein Verfahren zur Herstellung von Bauteilen aus einem Kobaltbasiswerkstoff genannt werden.

Ein diese Aufgabe lösendes Verfahren weist gemäß der Erfindung mindestens die in Anspruch 8 genannten Merkmale auf.

Auch sollte mindestens eine Verwendung angegeben werden, für die der erfindungsgemäße Werkstoff besonders geeignet ist.

Zur Lösung dieser Aufgabe schlägt die Erfindung vor, den erfindungsgemäßen Verbundwerkstoff für die Herstellung von Bauteilen zu verwenden, die für einen Einsatz bei Temperaturen von mindestens 400 °C vorgesehen sind, wobei die Bauteile während dieses Einsatzes hoher abrasiver oder korrosiver Belastung ausgesetzt sind.

Ein erfindungsgemäßer Verbundwerkstoff auf Kobaltbasis für den Einsatz bei gleichzeitig hohen Temperaturen und abrasiver oder korrosiver Belastung ist somit pulvermetallurgisch hergestellt und weist eine Matrix mit der in Anspruch 1 angegebenen Zusammensetzung auf.

Dabei sind erfindungsgemäß in der Matrix Hartstoffpartikel in Gehalten von 2,5 - 30 Gew.-% eingebettet.

Die Angaben zu den Gehalten des Matrixwerkstoffs beziehen sich auf das Gewicht des Matrixwerkstoffs selbst, wogegen die Angaben zu den Gehalten an den in der Matrix eingebetteten Hartstoffen sich auf das Gewicht des Verbundwerkstoffs beziehen. Zu den in die Matrix erfindungsgemäß eingebetteten Hartstoffen zählen dabei folglich die Karbide nicht, die durch den Matrixwerkstoff selbst gebildet werden, wie beispielsweise Cr- oder W-Karbide.

Bei einem erfindungsgemäß hartphasenverstärkten Verbundwerkstoff dienen die eingangs bereits vorgestellten, aus der Praxis bekannten Kobaltbasiswerkstoffe als Matrix, in die erfindungsgemäß Hartstoffe eingebettet sind.

Auf diese Weise wird gegenüber den konventionellen Kobaltbasiswerkstoffen eine deutlich gesteigerte Härte und Verschleißbeständigkeit erzielt. So liegt die Härte erfindungsgemäß legierter und pulvermetallurgisch erzeugter Verbundwerkstoffe typischerweise bei bis zu 70 HRC und damit deutlich über dem Niveau konventioneller Co-Basis Werkstoffe.

Durch die erfindungsgemäße Zugabe von Hartphasen zu der durch die Erfindung definierten Metallmatrix wird ein sogenannter Metal-Matrix Composit ("MMC"), auch Metallmatrix-Verbundwerkstoff genannt, erhalten. Die für den Matrixwerkstoff erfindungsgemäß vorgegebene Legierungsvorschrift umfasst dabei eine Spanne von Zusammensetzungen, deren Härte und Zähigkeit durch Variation ihrer Gehalte an den einzelnen Legierungsbestandteilen variiert werden kann. Die durch Variation der Zusammensetzung der Matrix eingestellte Härte bildet somit die "Grundhärte" des erfindungsgemäßen Verbundwerkstoffs, dessen tatsächliche Härte durch die Zugabe der in die Matrix eingebetteten Hartphasen gegenüber der Grundhärte weiter erhöht ist.

Kohlenstoff C: Kohlenstoff wird im erfindungsgemäß vorgesehenen Matrixwerkstoff zur Bildung von Karbiden benötigt, welche wesentlich die Grundhärte bestimmen. Zu diesem Zweck ist für den C-Gehalt des Matrixwerkstoffs eine Spanne von 0,2 - 2,0 Gew.-% vorgesehen. Der jeweils optimale C-Gehalt ist direkt mit dem jeweils anwesenden Gehalt an karbidbildenden Elementen wie z.B. Cr und W verknüpft.

Silizium Si: Durch optionale Zugabe von Silizium werden der Schmelzpunkt und die Viskosität der Schmelze reduziert. Gleichzeitig wird Si für die Desoxidation der Schmelze benötigt. Um schädliche Einflüsse von Si auf die Eigenschaften des Matrixwerkstoffs zu vermeiden, ist der Gehalt auf höchstens 1,5 Gew.-% begrenzt.

Mangan Mn: Ähnlich wie Silizium beeinflusst Mangan die Viskosität der Schmelze. Zudem wird Schwefel durch Bildung von Mn-Sulfiden abgebunden, wodurch der negative Einfluss von Schwefel reduziert werden kann. Die günstigen Wirkungen von Mn können bei einem erfindungsgemäß vorgesehenen Matrixwerkstoff durch optionale Zugabe von Mn in Gehalten von bis zu 1,5 Gew.-% genutzt werden.

Chrom Cr: Zum einen wird Chrom benötigt, um die notwendige Korrosionsbeständigkeit des erfindungsgemäß vorgesehenen Matrixwerkstoffs zu gewährleisten. Das betrifft vor allem solche Varianten der erfindungsgemäß vorgesehenen Matrix, die einen niedrigen C-Gehalt besitzen. Bei zunehmendem C-Gehalt beteiligt sich Cr vermehrt an der Bildung von M₇C₃-Karbiden. Dadurch erhöht sich die Härte und der abrasive Verschleißwiderstand, die Korrosionsbeständigkeit wird jedoch herabgesetzt. Zusätzlich trägt Chrom, wenn auch in einem geringerem Umfang, ähnlich wie Mo und W zur Mischkristallverfestigung bei. Erfindungsgemäß sind für diese Zwecke Cr-Gehalte von 27,0 - 32,0 Gew.-% vorgesehen.

Molybdän Mo: Die Wirkung von Mo ist vergleichbar mit der von Wolfram. Daher können die Gehalte an Mo und W erforderlichenfalls ausgetauscht werden. Mo beteiligt sich auch bei erhöhten Temperaturen zur Steigerung der Warmfestigkeit an der Mischkristallverfestigung und bildet zusammen mit Kohlenstoff Karbide vom Typ M₂C. Im Vergleich zu den Wolframkarbiden ist die Härte jedoch niedriger. Aus diesem Grund wird Wolfram als karbidbildendes Element häufig bevorzugt. Allerdings trägt Molybdän zur Steigerung der Korrosionsbeständigkeit bei. Deshalb kann es bei karbidärmeren Matrixvarianten zweckmäßig sein, Mo an Stelle von W als Karbidbildner einzusetzen, um gleichzeitig ein optimiertes Korrosionsverhalten zu erzielen. Dementsprechend beträgt der Mo-Gehalt im Fall, dass W nur in Gehalten von weniger als 0,5 Gew.-% anwesend ist, mindestens 4,0 Gew.-%, wogegen der Gehalt an Mo bei W-Gehalten von mindestens 4,0 Gew.-% im Bereich von weniger als 0,5 Gew.-% liegt.

Nickel Ni: Nickel stabilisiert die kubische Phase in der Co-Basis, welche duktiler ist. Soll eine gewisse Duktilität des Matrixwerkstoffs gewährleistet werden, kann dies daher durch optionale Zugabe von weniger als 2,0 Gew.-% Ni erreicht werden. Aufgrund der geringeren Härte ist diese Phase jedoch für Verschleißschutzanwendungen häufig nicht gewünscht. In diesem Fall kann auf die Zugabe von Ni verzichtet werden, so dass Ni allenfalls in unwirksamen, den unvermeidbaren Verunreinigungen zuzurechnenden Gehalten in der Matrix vorhanden ist

Eisen Fe: Der Effekt von Eisen im erfindungsgemäß vorgesehenen Matrixwerkstoff ist vergleichbar mit dem Effekt von Nickel. Höhere Fe-Gehalte bedeuten eine Reduzierung der Warmhärte und zusätzlich der Korrosionsbeständigkeit. Sollen die positiven Einflüsse von Fe auf die Duktilität genutzt werden, können optional Fe-Gehalte von weniger als 2,0 Gew.-% der Metallmatrix zugegeben werden. Andernfalls liegt Fe ebenso wie Ni allenfalls nur als Verunreinigung vor.

Wolfram W: Wie oben schon im Zusammenhang mit Mo erläutert, haben Wolfram und Mo in Bezug auf die Steigerung der Warmfestigkeit dieselbe Wirkung. Auch bildet W mit Kohlenstoff Karbide, welche zur Steigerung der Härte und des Verschleißwiderstandes entscheidend sind.

Im voranstehend erläuterten, von der Erfindung für Metallmatrix vorgegebenen Rahmen lassen sich folgende fünf für die Praxis wesentlichen Varianten A - E des Matrixwerkstoffs einstellen, die sich durch eine zunehmende Härte (Matrixtyp A/B = weicher, Matrixtyp E = härter) auszeichnen:
Typ A/B: Die Matrix hat einen C-Gehalt von 0,2 - 0,8 Gew.-% und entweder einen Mo-Gehalt von 4,0 - 6,0 Gew.-% bei einem W-Gehalt von weniger als 0,5 Gew.-% (Variante A) oder einen Mo-Gehalt von weniger als 0,5 Gew.-% bei einem W-Gehalt von 4,0 - 6,0 Gew.-% (Variante B).
Typ C: Die Matrix hat einen C-Gehalt von 0,8 - 1,4 Gew.-%, einen Mo-Gehalt von weniger als 0,5 Gew.-% und einen W-Gehalt von 4,0 - 7,0 Gew.-%.
Typ D: Die Matrix hat einen C-Gehalt von 1,4 - 2,0 Gew.-%, einen Mo-Gehalt von weniger als 0,5 Gew.-% und einen W-Gehalt von 7,0 - 10,0 Gew.-%.
Typ E (nicht erfindungsgemäß): Die Matrix hat einen C-Gehalt von 2,0 - 3,0 Gew.-%, einen Mo-Gehalt von weniger als 0,5 Gew.-% und einen W-Gehalt von 10,0 - 14,0 Gew.-%.

Die Zusammensetzungen der für die Praxis wichtigen Typen A - E des MatrixWerkstoffs eines erfindungsgemäßen Verbundwerkstoffs sind in Tabelle 1 noch einmal zusammengefasst.

Die pulvermetallurgische Herstellung erlaubt es, die Härte und Verschleißbeständigkeit des erfindungsgemäßen Verbundwerkstoffs durch gezielte Zugabe von Hartstoffpartikeln im Sinne der jeweiligen Anwendung weiter zu optimieren.

Bei den in den in der voranstehend erläuterten Weise zusammengesetzten und optional variierten Matrixwerkstoff eingelagerten Hartstoffen, in der Fachsprache auch "Hartphasen" genannt, kann es sich um Karbide, Nitride, Oxide oder Boride handeln. Zur Gruppe der geeigneten Hartstoffe gehören demnach Al₂O₃, B₄C, SiC, ZrC, VC, NbC, TiC, WC, W₂C, Mo₂C, V₂C, BN, Si₃N₄, NbN oder TiN.

Für die erfindungsgemäßen Zwecke hat sich Titankarbid TiC als besonders geeignet erwiesen. Titankarbid weist eine Härte von 3200 HV auf und erhöht so die Härte und Verschleißbeständigkeit der auf Kobalt basierenden Matrix des erfindungsgemäßen Verbundwerkstoffs besonders effektiv. Gleichzeitig ist TiC chemisch beständig und hat keinen negativen Einfluss auf die Korrosionsbeständigkeit. Ebenso wirkt sich die geringe Dichte von TiC vorteilhaft aus.

Über die Menge der in den Matrixwerkstoff eingebetteten Hartphasen kann über die Grundhärte der Matrix die tatsächliche Härte des erfindungsgemäßen Verbundwerkstoffs eingestellt werden.

Bei dem Verbundwerkstoff zulegierten Hartstoff-Gehalten von weniger als 2,5 Gew.-% stellt sich keine Verbesserung der Härte und Verschleißbeständigkeit ein. Deshalb beträgt der Hartstoffgehalt bei einem erfindungsgemäßen

Verbundwerkstoff mindestens 2,5 Gew.-%.

Bei Hartstoffgehalten des erfindungsgemäßen Verbundwerkstoffs von 2,5 - 10 Gew.-% tritt gegenüber der Härte und Verschleißbeständigkeit des reinen Matrixwerkstoffs eine moderate Erhöhung der Verschleißbeständigkeit und Härte ein.

Liegen die Hartstoffgehalte oberhalb von 10 Gew.-% und betragen bis zu 20 Gew.-%, so wird gegenüber der Härte und Verschleißbeständigkeit des reinen Matrixwerkstoffs eine mittlere Steigerung von Härte und Verschleißbeständigkeit erzielt.

Liegen die Hartstoffgehalte oberhalb von 20 Gew.-% und betragen bis zu 30 Gew.-%, so wird gegenüber der Härte und Verschleißbeständigkeit des reinen Matrixwerkstoffs eine maximale Steigerung von Härte und Verschleißbeständigkeit erzielt.

Zu bedenken ist hier, dass mit zunehmendem Hartstoffgehalt die Sprödigkeit des erfindungsgemäßen Verbundwerkstoffs zunimmt. Bei Hartstoffgehalten von mehr als 30 Gew.-% wird der Verbundwerkstoff zu spröde und hart, so dass seine Verarbeitbarkeit nicht mehr gesichert ist. Deshalb ist der maximale Gehalt an Hartstoffpartikeln in einem erfindungsgemäßen Verbundwerkstoff auf 30 Gew.-% beschränkt.

Ein optimaler Nutzen der Einbettung der Hartstoffe in die Matrix des erfindungsgemäßen Verbundwerkstoffs ergibt sich bei Hartstoffgehalten von 3,5 - 25 Gew.-%, insbesondere 3,5 - 20 Gew.-%.

Eine optimale Wirkung der Hartstoffpartikel im erfindungsgemäßen Verbundwerkstoff stellt sich darüber hinaus dann ein, wenn die mittlere Korngröße der Hartstoffpartikel weniger als 50 µm beträgt.

Zur Herstellung eines für den Einsatz bei Temperaturen von mindestens 400 °C bestimmten Bauteils, das während dieses Einsatzes hoher abrasiver oder korrosiver Belastung ausgesetzt ist, schlägt die Erfindung ein Verfahren vor, das folgende Arbeitsschritte umfasst:
a) Es wird ein Kobaltlegierungspulver mit folgender Zusammensetzung bereitgestellt (in Gew.-%)

| | |
|---|---|
| C: | 0,2 - 2,0 %, |
| Si: | < 1,5 %, |
| Mn: | < 1,5 %, |
| Cr: | 27,0 - 32,0 %, |
| Ni: | < 2,0%, |
| Fe: | < 2,0 %, |

wobei
- bei einem C-Gehalt von 0,2 - 0,8 % ein Mo-Gehalt von 4,0 - 6,0 % und ein W-Gehalt von weniger als 0,5 % vorhanden ist oder
- bei einem C-Gehalt von 0,2 - 0,8 % ein Mo-Gehalt von weniger als 0,5 % und ein W-Gehalt von 4,0 - 6,0 % vorhanden ist,
   oder
- bei einem C-Gehalt von 0,8 - 2,0 %, ein Mo-Gehalt von weniger als 0,5 % und ein W-Gehalt von 4,0 - 10,0 % vorhanden ist,
Rest Kobalt und unvermeidbare Verunreinigungen.
b) Das Kobaltlegierungspulver wird mit Hartstoffpartikeln mit der Maßgabe vermischt, dass der Gehalt an Hartstoffpartikeln an der erhaltenen Kobaltlegierungspulver-Hartstoffpartikel-Mischung 2,5 bis 30 Gew.-% beträgt.
c) Optional wird die Kobaltlegierungspulver-Hartstoffpartikel-Mischung getrocknet.
d) Aus der Kobaltlegierungspulver-Hartstoffpartikel-Mischung wird durch Heiß-Isostatisches-Pressen ein festes Halbzeug gebildet.
e) Das erhaltene Halbzeug wird zu dem Bauteil fertig bearbeitet.

In Bezug auf die praktische Durchführung und die Ausgestaltungen der Arbeitsschritte a) bis e) des erfindungsgemäßen Verfahrens gelten dabei folgende Hinweise:

### Arbeitsschritt a)

Die Pulverherstellung kann in konventioneller Weise beispielsweise durch Gasverdüsen oder jedes andere geeignete Verfahren erfolgen. Hierzu kann das Legierungspulver beispielsweise durch Gas- oder Wasserverdüsen oder eine Kombination aus diesen beiden Verdüsungsverfahren erzeugt werden. Denkbar ist eine Verdüsung einer in erfindungsgemäßer Weise legierten Schmelze zu dem Legierungspulver.

Alternativ ist es aber auch möglich, die Legierungselemente des Kobaltlegierungspulvers zunächst einzeln in Pulverform in Mengen bereitzustellen, die den für das jeweilige Legierungselement vorgesehenen Gehaltsanteilen entsprechen und diese Pulvermengen dann zu dem erfindungsgemäß zusammengesetzten Kobaltlegierungspulver zu vermischen.

Erforderlichenfalls werden aus den Pulverpartikeln für die erfindungsgemäße Weiterverarbeitung durch Sieben diejenigen selektiert, die einen Durchmesser von weniger als 500 µm besitzen, wobei sich Pulver mit Korngrößen von weniger als 250 µm, insbesondere von weniger als 180 µm, als besonders geeignet erwiesen haben.

Die Hartstoffpartikel und das Pulver, welches die Matrix des erfindungsgemäßen Verbundwerkstoffs bildet, können in einem an sich für diese Zwecke bekannten Mischer, wie einem Doppelkonusmischer oder einem Taumelmischer, gemischt werden. Typische Mischzeiten betragen dabei 20 - 40 min, insbesondere 30 min.

Unabhängig von der Art und Weise seiner Erzeugung weist das erfindungsgemäß bereitgestellte Legierungspulver optimaler Weise eine Schüttdichte von 2 - 6 g/cm3 (bestimmt nach DIN EN ISO 3923-1) und eine Klopfdichte von 3 - 8 g/cm3 (bestimmt nach DIN EN ISO 3953) auf.

### Arbeitsschritt b)

Das im Arbeitsschritt a) bereitgestellte Kobaltlegierungspulver wird mit dem jeweils ausgewählten Hartstoffpulver vermischt. Die Menge an zugemischten Hartstoffpartikeln wird dabei unter Berücksichtigung der voranstehend in Bezug auf die optimierte Auswahl des Gehalts an Hartstoffen gegebenen Hinweise so bestimmt, dass der Gehalt der Hartstoffpartikel an der fertigen Mischung im Bereich von 2,5 - 30 Gew.-% liegt. Auch die Schüttdichte des mit dem Legierungspulver vermischten Hartstoffpulvers liegt optimaler Weise bei 2 - 6 g/cm3 (bestimmt nach DIN EN ISO 3923-1). Genauso liegt die Klopfdichte des Hartstoffpulvers bevorzugt bei ebenfalls 3 - 8 g/cm3 (bestimmt nach DIN EN ISO 3953).

### Arbeitsschritt c)

Sofern erforderlich, kann das in Arbeitsschritt a) oder Arbeitsschritt b) hergestellte Legierungspulver in konventioneller Weise getrocknet werden, um Rückstände von Flüssigkeiten und sonstigen flüchtigen Bestandteilen zu entfernen, die den anschließenden Formgebungsprozess behindern könnten.

### Arbeitsschritt d)

Aus dem Hartstoffpartikel enthaltenden Legierungspulver wird nun ein Rohteil (Halbzeug) geformt. Hierzu kann das Legierungspulver in an sich bekannter Weise durch ein geeignetes Sinterverfahren in die jeweilige Form gebracht werden, welches als Heiß-Isostatisches-Pressen ("HIPen") durchgeführt wird. Typische Drücke beim HIPen liegen hier im Bereich von 100 - 150 MPa, insbesondere 100 - 125 MPa, bei einer Temperatur von 1050 - 1250°C, insbesondere 1100 - 1200 °C. Die Aufheizrate auf diese Temperatur beträgt typischerweise 3 - 10 K/min und die Abkühlungsrate nach dem Ende des HIPen ebenfalls 3 - 10 K/min. Die typische Dauer, über die das Werkstück unter dem genannten Druck bei der genannten Temperatur gehalten wird, beträgt 120 - 240 min.

### Arbeitsschritt e)

Das nach dem Arbeitsschritt d) erhaltene Halbzeug bedarf noch einer Fertigbearbeitung, um ihm beispielsweise die geforderte Endform zu verleihen. Die Fertigbearbeitung umfasst dazu beispielsweise eine mechanische, insbesondere spanabhebende Bearbeitung des Halbzeugs.

Eine Wärmebehandlung der erfindungsgemäß legierten und erzeugten Kobaltmatrix-Werkstoffe ist nicht erforderlich. Nach der gegebenenfalls mechanisch-spanabhebend erfolgenden Bearbeitung können die erhaltenen Bauteile mit einem Substrat, wie beispielsweise einem Stahlbauteil, mittels kraft-, form- oder stoffschlüssiger Verbindungen, wie Löten, Verschrauben oder desgleichen, verbunden werden.

Erfindungsgemäße Kobaltbasis-MMC-Werkstoffe eignen sich im besonderen Maße für die Herstellung von Bauteilen, die im praktischen Einsatz hohen Temperaturen ausgesetzt und dabei stark abrasiv oder korrosiv belastet werden.

Typische Einsatztemperaturen dieser Bauteile liegen bei mindestens 400 °C, wobei aus erfindungsgemäßem Werkstoff hergestellte Bauteile ohne Weiteres auch Temperaturen von mehr als 800 °C dauerhaft ertragen. So sind erfindungsgemäß erzeugte Bauteile ohne Weiteres in der Lage Temperaturspitzenbelastungen von deutlich mehr als 1000 °C aufzunehmen, wie sie beispielsweise auftreten können, wenn aus erfindungsgemäßem Matrixwerkstoff bestehende Abschermesser bei der Umformung, insbesondere beim Schmieden zum Ablängen von Stahlstangen oder Rohren, von Stahlwerkstoffen oder desgleichen eingesetzt werden. Dort liegen die Einsatztemperaturen typischerweise bei bis zu 1300°C.

Folgende für die praktische Nutzung des erfindungsgemäßen Verbundwerkstoffs wichtige Bauteile, die unter Verwendungen eines erfindungsgemäß zusammengesetzten und beschaffenen Verbundwerkstoffs hergestellt werden können, sind hier zu nennen:
- Extrusionswerkzeuge für die Metallverarbeitung: Werkzeuge dieser Art, die aus erfindungsgemäßem Werkstoff hergestellt sind, eignen sich besonders gut für die Extrusion von Aluminium und Kupfer. Aufgrund der Härte und Verschleißbeständigkeit, auch bei erhöhten Temperaturen, ist ein stabiler Extrusionsprozess gesichert. Dabei kann auf einem beispielsweise aus Stahl bestehenden Kernsubstrat durch HIPen eine vor Verschleiß schützende Schicht aufgebracht werden. Alternativ ist es auch möglich, die Extruderschnecke insgesamt aus dem erfindungsgemäßen Verbundwerkstoff durch HIPen herzustellen.
- Abschermesser, die in der Metallverarbeitung benötigt werden, um beispielsweise gewalzte Stahlstränge auf Länge zu trennen. Dabei sind die Abschermesser extrem hohen Temperaturen von typischerweise mehr als 1000 °C und aufgrund des Kontaktes mit dem heißen Metall auch hohem abrasiven Verschleiß ausgesetzt. Als Verschleißschutz kann der erfindungsgemäße Verbundwerkstoff durch HIPen auf ein Trägersubstrat, beispielsweise ein Stahlsubstrat aufgebracht werden. Alternativ ist es auch hier möglich, die Abschermesser insgesamt aus erfindungsgemäßem Verbundwerkstoff durch HIPen herzustellen.
- Dornstangen, die beim Walzen von nahtlosen Rohren zum Einsatz kommen.
Konventionell werden solche Dornstangen aus warmfesten Warmarbeitsstählen gefertigt. Auch hier kann durch HIPen auf ein beispielsweise aus einem solchen Warmarbeitsstahl gefertigtes Substrat eine Schicht des erfindungsgemäßen Verbundwerkstoffs aufgebracht werden. Die derart aufgebrachte, aus dem erfindungsgemäßen Verbundwerkstoff bestehende Schicht kann dabei auf diejenigen Flächenabschnitte des Dorns beschränkt werden, an denen es im Einsatz zu erhöhter abrasiver Belastung kommt. Dies ist typischerweise der Kopfbereich des Dorns. Jedoch ist es auch denkbar, den Dorn insgesamt aus erfindungsgemäßem Verbundwerkstoff herzustellen, wozu auch hier das HIPen verwendet wird.

Bei einem erfindungsgemäßen Werkstoff lassen sich die Zusammensetzung der Kobaltmatrix und der Hartstoffgehalt bezogen auf den jeweiligen Verwendungszweck so aufeinander abstimmen, dass der jeweils erhaltene Matrixwerkstoff einerseits eine optimale Kombination aus Härte und Dichte aufweist, andererseits aber auch optimal auf das jeweilige tribologische System, sprich die Anforderungen der jeweiligen Anwendung, abgestimmt ist.

Nachfolgend wird die Erfindung anhand von Ausführungsbeispielen erläutert.

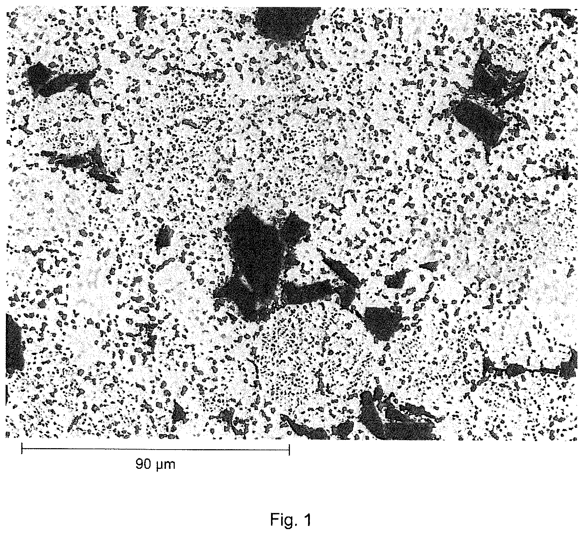

Die einzige Fig. 1 zeigt eine rasterelektronenmikroskopische (REM) Aufnahme einer untersuchten Variante des erfindungsgemäßen Verbundwerkstoffs.

Basis für die Versuche stellte die in Tabelle 1 allgemein definierte Matrixvariante C dar. Dabei wies der Matrixwerkstoff MMC_C der untersuchten Proben (in Gew.-%) konkret die in Tabelle 3 angegebene Zusammensetzung auf.

Hierauf aufbauend sind Varianten eines erfindungsgemäßen Verbundwerkstoffs erzeugt worden, deren Matrixwerkstoff MMC_C jeweils identisch mit der in Tabelle 2 angegebenen, dem Typ C zugeordneten Zusammensetzung übereinstimmte, die sich jedoch durch TiC-Gehalte unterschieden.

Ein entsprechend der Matrixlegierung MMC_C zusammengesetztes Matrixpulver hatte eine mittlere Korngröße von weniger als 180 µm, eine Schüttdichte von 4,40 g/cm³ sowie eine Klopfdichte von 5,50 g/cm³. Dieses Matrixpulver ist mit TiC-Hartstoffpulver, das eine mittlere Korngröße von weniger als 50 µm aufwies, für 30 min in einem Taumelmischer gemischt worden.

Anschließend ist die erhaltene Pulvermischung in eine Kapsel gefüllt und bei einem Druck von 102 - 106,7 MPa mit einer Aufheizrate von 3 - 10 K/min auf 1150 - 1153 °C erwärmt worden. Bei dieser Temperatur und dem genannten Druck sind die Proben über eine Dauer von 240 min unter dem genannten Druck gehalten worden. Nach Ende dieser Dauer sind die Proben mit 3 - 10 K/min auf Raumtemperatur abgekühlt worden.

An den so erhaltenen Proben sind gemäß aktuell gültiger DIN EN ISO 6508 die Härte und die Dichte (die Dichte wird entsprechend der DIN EN ISO 3369 bestimmt) bestimmt worden. Die Ergebnisse der Härte- und Dichtemessungen sind in Tabelle 3 angegeben.

Es ist zu erkennen, dass aus den ansteigenden TiC-Gehalten eine Steigerung der Härte und eine Abnahme der Dichte der erfindungsgemäßen Verbundwerkstoffvarianten resultiert.

Das Gefüge der Werkstoffvariante "Matrix C + 5% TiC" ist in Abbildung 1 dargestellt. Die in die Matrix eingebetteten TiC-Partikel sind dort als große schwarze vieleckige Flecken zu erkennen, wogegen die kleineren, weniger dunkel eingefärbten Sprenkel M₇C₃-Ausscheidungen sind.

In derselben Weise wie die auf Basis des Matrixwerkstoffs C erstellten Proben sind Proben mit Matrixwerkstoffen MMC_A, MMC_B, MMC_D und MMC_E, die unter die für die Matrixwerkstoffe A, B, E und D in Tabelle 1 allgemein angegebenen Vorschriften fallen, erzeugt worden. Auch hierbei sind die Gehalte an TiC-Hartstoffpartikeln in den Verbundwerkstoffen der Proben variiert worden. Die bei diesen Versuchen jeweils verwendeten Zusammensetzungen der Matrixwerkstoffe sind ebenfalls in Tabelle 2 angegeben. Die an den so erhaltenen Proben ermittelten Härte- und Dichtwerte sind in Tabelle 3 genannt. Auch hier zeigt sich deutlich härtesteigernde Wirkung der erfindungsgemäßen Zugabe an TiC-Hartstoffen.

Anhand beispielsweise des Vergleichs der aus dem Werkstoff MMC_D mit 10 Gew.-% TiC bestehenden Proben und der aus dem Werkstoff MMC_E mit 0 Gew.-% TiC bestehenden Proben ist ersichtlich, dass sich die Dichte beider Werkstoffe bei annähernd gleicher Härte HRC deutlich unterscheidet. In Folge dessen eignet sich der erfindungsgemäße, eine geringere Dichte aufweisende Werkstoff MMC_D mit 10 Gew.-% wesentlich besser als aus dem Werkstoff für die Erzeugung von Bauteilen, die im Einsatz hohen Geschwindigkeiten oder Beschleunigungen ausgesetzt sind, wie beispielsweise von rotatorisch bewegten Werkzeugen. Gleichzeitig bietet der erfindungsgemäße Werkstoff MMC_D mit 10 Gew.-% TiC im jeweiligen tribologischen System Vorteile in Bezug auf die Verschleißbeständigkeit, wenn der Einsatz des jeweiligen Werkzeugs in einem abrasiven, beispielsweise durch größere Mengen von Abrieb oder anderen Partikeln verursachten Umfeld erfolgt.

**Tabelle 1**

| Matrixtyp | C | Si | Mn | Cr | Mo | Ni | Fe | W | Hinweis zur Härte |
|---|---|---|---|---|---|---|---|---|---|
| A | 0,2 - 0,8 | <1,5 | <1,5 | 27,0 - 32,0 | 4,0 - 6,0 | <2,0 | <2,0 | <0,5 | geringste Härte, |
| B | 0,2 - 0,8 | | | | <0,5 | | | 4,0 - 6,0 | höchste Zähigkeit, |
| | | | | | | | | | höchste Korrosionsbeständigkeit |
| C | 0,8 - 1,4 | | | | < 0,5 | | | 4,0 - 7,0 | höhere Härte als Varianten A und B, |
| | | | | | | | | | niedrigere Härte als Variante D |
| D | 1,4 - 2,0 | | | | < 0,5 | | | 7,0 - 10,0 | höhere Härte als Variante C, |
| | | | | | | | | | niedrigere Härte als Variante E |
| E *) | 2,0 - 3,0 | | | | < 0,5 | | | 10 - 14 | höchste Härte |

| | | | | | | | | | |
|---|---|---|---|---|---|---|---|---|---|
| Gehaltsangaben in Gew.-%, Rest Kobalt und unvermeidbare Verunreinigungen *) nicht erfindungsgemäß | | | | | | | | | |

**Tabelle 2**

| Zugeordneter Matrixtyp | Matrixwerkstoff | C | Si | Mn | Cr | Mo | Ni | Fe | W |
|---|---|---|---|---|---|---|---|---|---|
| A | MMC A | 0,33 | 1,01 | 0,89 | 29,3 | 5,10 | 0,29 | 0,57 | 0,13 |
| B | MMC B | 0,31 | 0,97 | 0,93 | 29,4 | 0,22 | 0,31 | 0,68 | 4,31 |
| C | MMC C | 1,22 | 1,08 | 0,67 | 30,1 | 0,18 | 0,27 | 0,52 | 5,51 |
| D | MMC D | 1,67 | 0,96 | 0,83 | 29,8 | 0,17 | 0,40 | 0,49 | 8,80 |
| E *) | MMC_E | 2,46 | 1,07 | 0,94 | 30,4 | 0,17 | 0,29 | 0,61 | 12,33 |

| | | | | | | | | | |
|---|---|---|---|---|---|---|---|---|---|
| Gehaltsangaben in Gew.-% (gemessen mit dem Funkenspektrometer), Rest Kobalt und unvermeidbare Verunreinigungen *) nicht erfindungsgemäß | | | | | | | | | |

**Tabelle 3**

| Matrixwerkstoff | TiC-Gehalt des Verbundwerkstoffs [Gew.-%] | Härte in HRC | Dichte in g/cm³ |
|---|---|---|---|
| MMC_A | 0 | 31 | 8,33 |
| MMC_A | 10 | 36 | 7,79 |
| MMC B | 0 | 32 | 8,35 |
| MMC_B | 10 | 36 | 7,80 |
| MMC_C | 0 | 44 | 8,37 |
| MMC_C | 3,5 | 47 | 8,16 |
| MMC_C | 5 | 48 | 8,02 |
| MMC_C | 10 | 51 | 7,81 |
| MMC_C | 15 | 52 | 7,57 |
| MMC_C | 25 | 54 | 7,12 |
| MMC D | 0 | 48 | 8,45 |
| MMC_D | 10 | 55 | 7,89 |
| MMC_E *) | 0 | 54 | 8,70 |
| MMC_E *) | 10 | 62 | 8,08 |

| | | | |
|---|---|---|---|
| *) nicht erfindungsgemäß | | | |

## Patentansprüche

1. Halbzeug, welches aus einem Verbundwerkstoff auf Kobaltbasis für den Einsatz bei gleichzeitig hohen Temperaturen und abrasiver oder korrosiver Belastung durch heißisostatisches Pressen geformt ist, wobei der Verbundwerkstoff pulvermetallurgisch hergestellt ist und eine Matrix mit folgender Zusammensetzung aufweist (in Gew.-%):
| | |
|---|---|
| C: | 0,2 - 2,0 %, |
| Si: | < 1,5 %, |
| Mn: | < 1,5 %, |
| Cr: | 27,0 - 32,0 %, |
| Ni: | < 2,0%, |
| Fe: | < 2,0 %, |
wobei
- bei einem C-Gehalt von 0,2 - 0,8 % ein Mo-Gehalt von 4,0 - 6,0 % und ein W-Gehalt von weniger als 0,5 % vorhanden ist
oder
- bei einem C-Gehalt von 0,2 - 0,8 % ein Mo-Gehalt von weniger als 0,5 % und ein W-Gehalt von 4,0 - 6,0 % vorhanden ist,
oder
- bei einem C-Gehalt von 0,8 - 2,0 %, ein Mo-Gehalt von weniger als 0,5 % und ein W-Gehalt von 4,0 - 10,0 % vorhanden ist,
Rest Kobalt und unvermeidbare Verunreinigungen,
wobei in der Matrix Hartstoffpartikel in Gehalten von 2,5 - 30 Gew.-% eingebettet sind.

2. Halbzeug nach Anspruch 1,**dadurch gekennzeichnet, dass** in der Matrix Hartstoffpartikel in Gehalten von 2,5 - 10 Gew.-% eingebettet sind.

3. Halbzeug nach Anspruch 1, **dadurch gekennzeichnet, dass** in der Matrix Hartstoffpartikel in Gehalten von mehr als 10 Gew.-% bis 20 Gew.-% eingebettet sind.

4. Halbzeug nach Anspruch 1, **dadurch gekennzeichnet, dass** in der Matrix Hartstoffpartikel in Gehalten von mehr als 20 Gew.-% bis 30 Gew.-% eingebettet sind.

5. Halbzeug nach einem der voranstehenden Ansprüche, **dadurch gekennzeichnet, dass** die in der Matrix eingebetteten Hartstoffpartikel der Gruppe "TiC, Al₂O₃, B₄C, SiC, ZrC, VC, NbC, WC, W₂C, Mo₂C, V₂C, BN, Si₃N₄, NbN oder TiN" angehören.

6. Halbzeug nach einem der voranstehenden Ansprüche, **dadurch gekennzeichnet, dass** die Hartstoffpartikel in einer mittleren Korngröße von weniger als 50 µm vorliegen.

7. Verwendung eines gemäß einem der voranstehenden Ansprüche beschaffenen Halbzeugs für die Herstellung von Bauteilen, die für einen Einsatz bei Temperaturen von mindestens 400 °C vorgesehen sind, wobei das Bauteil während dieses Einsatzes hoher abrasiver oder korrosiver Belastung ausgesetzt ist.

8. Verfahren zur Herstellung eines für den Einsatz bei Temperaturen von mindestens 400 °C bestimmten Bauteils, das während dieses Einsatzes hoher abrasiver oder korrosiver Belastung ausgesetzt ist, umfassend folgende Arbeitsschritte:
a) Es wird ein Kobaltlegierungspulver mit folgender Zusammensetzung bereitgestellt (in Gew.-%)
C: 0,2 - 2,0 %
Si: < 1,5 %
Mn: < 1,5
Cr: 27,0 - 32,0 %
Ni: < 2.0 %
Fe: < 2,0 %
wobei
- bei einem C-Gehalt von 0,2 - 0,8 % ein Mo-Gehalt von 4,0 - 6,0 % und ein W-Gehalt von weniger als 0,5 % vorhanden ist
oder
- bei einem C-Gehalt von 0,2 - 0,8 % ein Mo-Gehalt von weniger als 0,5 % und ein W-Gehalt von 4,0 - 6,0 % vorhanden ist,
oder
- bei einem C-Gehalt von 0,8 - 2,0 %, ein Mo-Gehalt von weniger als 0,5 % und ein W-Gehalt von 4,0 - 10,0 % vorhanden ist,
Rest Kobalt und unvermeidbare Verunreinigungen.
b) Das Kobaltlegierungspulver wird mit Hartstoffpartikeln mit der Maßgabe vermischt, dass der Gehalt an Hartstoffpartikeln an der erhaltenen Kobaltlegierungspulver-Hartstoffpartikel-Mischung 2,5 bis 30 Gew.-% beträgt.
c) Optional wird die Kobaltlegierungspulver-Hartstoffpartikel-Mischung getrocknet.
d) Aus der Kobaltlegierungspulver-Hartstoffpartikel-Mischung wird durch ein Heiß-Isostatisches-Pressen ein festes Halbzeug gebildet.
e) Das erhaltene Halbzeug wird zu dem Bauteil fertig bearbeitet.

9. Verfahren nach Anspruch 8, **dadurch gekennzeichnet, dass** die Pulverpartikel des Kobaltlegierungspulvers in einem Verdüsungsverfahren hergestellt werden.

10. Verfahren nach Anspruch 8, **dadurch gekennzeichnet, dass** die Pulverpartikel des Kobaltlegierungspulvers erzeugt werden, indem die Legierungselemente des Kobaltlegierungspulvers zunächst einzeln in Pulverform in Mengen bereitgestellt werden, die den für das jeweilige Legierungselement vorgesehenen Gehaltsanteilen entsprechen und diese Pulvermengen dann zu dem erfindungsgemäß zusammengesetzten Kobaltlegierungspulver vermischt werden.

11. Verfahren nach einem der Ansprüche 9 oder 10, **dadurch gekennzeichnet, dass** durch Sieben der Pulverpartikel diejenigen selektiert werden, die einen Durchmesser von weniger als 500 µm besitzen.

12. Verfahren nach einem der Ansprüche 8 bis 11, **dadurch gekennzeichnet, dass** die Korngröße der Pulverpartikel weniger als 250 µm beträgt.

13. Verfahren nach Anspruch 12, **dadurch gekennzeichnet, dass** die Korngröße der Pulverpartikel weniger als 180 µm beträgt.

14. Verfahren nach einem der Ansprüche 8 - 13, **dadurch gekennzeichnet, dass** die Schüttdichte des im Arbeitsschritt a) bereitgestellten Kobaltlegierungspulvers 2 - 6 g/cm³, bestimmt nach DIN EN ISO 3923-1, und die Klopfdichte 3 - 8 g/cm³, bestimmt nach DIN EN ISO 3953, beträgt.

## Claims

1. Semi-finished product formed from a cobalt-based composite material for use with simultaneously high temperatures and an abrasive or corrosive load by hot isostatic pressing, the composite material being produced by powder metallurgy and having a matrix which has the following composition (in wt.%):
| | |
|---|---|
| C: | 0.2-2.0%, |
| Si: | <1.5%, |
| Mn: | <1.5%, |
| Cr: | 27.0-32.0%, |
| Ni: | <2.0%, |
| Fe: | <2.0%, |
wherein
- in the case of a C content of 0.2-0.8%, an Mo content of 4.0-6.0% and a W content of less than 0.5% are present
or
- in the case of a C content of 0.2-0.8%, an Mo content of less than 0.5% and a W content of 4.0-6.0% are present,
or
- in the case of a C content of 0.8-2.0%, an Mo content of less than 0.5% and a W content of 4.0-10.0% are present,
remainder cobalt and unavoidable impurities,
wherein hard material particles are embedded in the matrix in contents of 2.5-30 wt.%.

2. Semi-finished product according to claim 1, **characterized in that** hard material particles are embedded in the matrix in contents of 2.5-10 wt.%.

3. Semi-finished product according to claim 1, **characterized in that** hard material particles are embedded in the matrix in contents of more than 10 wt.% to 20 wt.%.

4. Semi-finished product according to claim 1, **characterized in that** hard material particles are embedded in the matrix in contents of more than 20 wt.% to 30 wt.%.

5. Semi-finished product according to any of the preceding claims, **characterized in that** the hard material particles embedded in the matrix belong to the group "TiC, Al₂O₃, B₄C, SiC, ZrC, VC, NbC, WC, W₂C, Mo₂C, V₂C, BN, Si₃N₄, NbN or TiN".

6. Semi-finished product according to any of the preceding claims, **characterized in that** the hard material particles are present in an average particle size of less than 50 µm.

7. Use of a semi-finished product obtained according to any of the preceding claims for the production of components which are provided for use at temperatures of at least 400°C, wherein the component is subjected to a high abrasive or corrosive load during this use.

8. Method for producing a component intended for use at temperatures of at least 400°C, which is subjected to a high abrasive or corrosive load during this use, comprising the following working steps:
a) providing a cobalt alloy powder having the following composition (in wt.%)
| | |
|---|---|
| C: | 0.2-2.0% |
| Si: | <1.5% |
| Mn: | <1.5 |
| Cr: | 27.0-32.0% |
| Ni: | <2.0% |
| Fe: | <2.0% |
wherein
- in the case of a C content of 0.2-0.8%, an Mo content of 4.0-6.0% and a W content of less than 0.5% are present
or
- in the case of a C content of 0.2-0.8%, an Mo content of less than 0.5% and a W content of 4.0-6.0% are present, or
- in the case of a C content of 0.8-2.0%, an Mo content of less than 0.5% and a W content of 4.0-10.0% are present,
remainder cobalt and unavoidable impurities.
b) The cobalt alloy powder is mixed with hard material particles with the proviso that the content of hard material particles in the obtained cobalt alloy powder-hard material particle mixture is 2.5 to 30 wt.%.
c) Optionally, the cobalt alloy powder-hard material particle mixture is dried.
d) A solid semi-finished product is formed from the cobalt alloy powder-hard material particle mixture by hot isostatic pressing.
e) The semi-finished product obtained is finished to form the component.

9. Method according to claim 8, **characterized in that** the powder particles of the cobalt alloy powder are produced in an atomization process.

10. Method according to claim 8, **characterized in that** the powder particles of the cobalt alloy powder are produced by first providing the alloying elements of the cobalt alloy powder individually in powder form in amounts corresponding to the content portions provided for the relevant alloying element and then mixing these powder quantities to form the cobalt alloy powder composed according to the invention.

11. Method according to either claim 9 or claim 10, **characterized in that** by sieving the powder particles, the particles that have a diameter of less than 500 µm are selected.

12. Method according to any of claims 8 to 11, **characterized in that** the particle size of the powder particles is less than 250 µm.

13. Method according to claim 12, **characterized in that** the particle size of the powder particles is less than 180 µm.

14. Method according to any of claims 8-13, **characterized in that** the bulk density of the cobalt alloy powder provided in step a) is 2-6 g/cm³, determined according to DIN EN ISO 3923-1, and the tapped density is 3-8 g/cm³, determined according to DIN EN ISO 3953.

## Revendications

1. Produit semi-fini formé à partir d'un matériau composite à base de cobalt destiné à être utilisé à des températures élevées et une contrainte abrasive ou corrosive simultanées par une compression isostatique à chaud, le matériau composite étant fabriqué par métallurgie des poudres et présentant une matrice comportant la composition suivante (en % en poids) :
| | |
|---|---|
| C : | 0,2 à 2,0 %, |
| Si : | < 1,5 %, |
| Mn : | < 1,5 %, |
| Cr : | 27,0 à 32,0 %, |
| Ni : | < 2,0 %, |
| Fe : | < 2,0 %, |
dans lequel
- pour une teneur en C de 0,2 à 0,8 %, une teneur en Mo de 4,0 à 6,0 % et une teneur en W inférieure à 0,5 % sont présentes
ou
- pour une teneur en C de 0,2 à 0,8 %, une teneur en Mo inférieure à 0,5 % et une teneur en W de 4,0 à 6,0 % sont présentes,
ou
- pour une teneur en C de 0,8 à 2,0 %, une teneur en Mo inférieure à 0,5 % et une teneur en W de 4,0 à 10,0 % sont présentes,
un reste de cobalt et d'impuretés inévitables,
dans lequel des particules de matière dure sont incorporées dans la matrice en des teneurs de 2,5 à 30 % en poids.

2. Produit semi-fini selon la revendication 1, **caractérisé en ce que** des particules de matière dure sont incorporées dans la matrice en des teneurs de 2,5 à 10 % en poids.

3. Produit semi-fini selon la revendication 1, **caractérisé en ce que** des particules de matière dure sont incorporées dans la matrice en des teneurs de plus de 10 % en poids à 20 % en poids.

4. Produit semi-fini selon la revendication 1, **caractérisé en ce que** des particules de matière dure sont incorporées dans la matrice en des teneurs de plus de 20 % en poids à 30 % en poids.

5. Produit semi-fini selon l'une quelconque des revendications précédentes, **caractérisé en ce que** les particules de matière dure incorporées dans la matrice appartiennent au groupe « TiC, Al₂O₃, B₄C, SiC, ZrC, VC, NbC, WC, W₂C, Mo₂C, V₂C, BN, Si₃N₄, NbN ou TiN ».

6. Produit semi-fini selon l'une quelconque des revendications précédentes, **caractérisé en ce que** les particules de matière dure sont présentes en une taille de grains moyenne inférieure à 50 µm.

7. Utilisation d'un produit semi-fini obtenu selon l'une quelconque des revendications précédentes pour la fabrication de composants qui sont prévus pour une utilisation à des températures d'au moins 400 °C, le composant étant soumis à une forte contrainte abrasive ou corrosive pendant ladite utilisation.

8. Procédé de fabrication d'un composant destiné à être utilisé à des températures d'au moins 400 °C qui est soumis à une forte contrainte abrasive ou corrosive pendant ladite utilisation, comprenant les étapes de travail suivantes :
a) une poudre d'alliage de cobalt comportant la composition suivante est fournie (en % en poids)
| | |
|---|---|
| C : | 0,2 à 2,0 % |
| Si : | < 1,5% |
| Mn : | < 1,5 |
| Cr : | 27,0 à 32,0 % |
| Ni : | < 2,0 % |
| Fe : | < 2,0% |
dans lequel
- pour une teneur en C de 0,2 à 0,8 %, une teneur en Mo de 4,0 à 6,0 % et une teneur en W inférieure à 0,5 % sont présentes
ou
- pour une teneur en C de 0,2 à 0,8 %, une teneur en Mo inférieure à 0,5 % et une teneur en W de 4,0 à 6,0 % sont présentes, ou
- pour une teneur en C de 0,8 à 2,0 %, une teneur en Mo inférieure à 0,5 % et une teneur en W de 4,0 à 10,0 % sont présentes,
un reste de cobalt et d'impuretés inévitables.
b) la poudre d'alliage de cobalt est mélangée à des particules de matière dure, à condition que la teneur en particules de matière dure dans le mélange poudre d'alliage de cobalt-particules de matière dure obtenu soit de 2,5 à 30 % en poids.
c) éventuellement, le mélange poudre d'alliage de cobalt-particules de matière dure est séché.
d) un produit semi-fini solide est formé à partir du mélange poudre d'alliage de cobalt-particules de matière dure par une compression isostatique à chaud.
e) le produit semi-fini obtenu est traité pour obtenir le composant à la fin.

9. Procédé selon la revendication 8, **caractérisé en ce que** les particules de poudre de la poudre d'alliage de cobalt sont fabriquées par un procédé d'atomisation.

10. Procédé selon la revendication 8, **caractérisé en ce que** les particules de poudre de la poudre d'alliage de cobalt sont produites en fournissant d'abord les éléments d'alliage de la poudre d'alliage de cobalt individuellement sous forme de poudre en des quantités qui correspondent aux proportions de teneur prévues pour l'élément d'alliage respectif et en mélangeant ensuite lesdites quantités de poudre pour obtenir la poudre d'alliage de cobalt composée selon l'invention.

11. Procédé selon l'une des revendications 9 ou 10, **caractérisé en ce que** sont sélectionnées, par tamisage des particules de poudre, celles qui possèdent un diamètre inférieur à 500 µm.

12. Procédé selon l'une des revendications 8 à 11, **caractérisé en ce que** la taille de grains des particules de poudre est inférieure à 250 µm.

13. Procédé selon la revendication 12, **caractérisé en ce que** la taille de grains des particules de poudre est inférieure à 180 µm.

14. Procédé selon l'une des revendications 8 à 13, **caractérisé en ce que** la masse volumique apparente de la poudre d'alliage de cobalt fournie à l'étape de travail a) est de 2 à 6 g/cm³, déterminée selon la norme DIN EN ISO 3923-1, et la masse volumique après tassement est de 3 à 8 g/cm³, déterminée selon la norme DIN EN ISO 3953.
